# EUROPÄISCHE PATENTSCHRIFT

(11) **EP 1 290 341 B1**
(45) Veröffentlichungstag und Bekanntmachung des Hinweises auf die Patenterteilung: **09.08.2006**
(21) Anmeldenummer: 01931406.1
(22) Anmeldetag: 05.04.2001
(51) Int. Cl.: F02P 5/152

(54) **VERFAHREN ZUR KLOPFREGELUNG EINES VERBRENNUNGSMOTORS INSBESONDERE EINES FAHRZEUGS**
METHOD FOR THE KNOCK REGULATION OF AN INTERNAL COMBUSTION ENGINE, IN PARTICULAR ON A MOTOR VEHICLE
PROCEDE POUR LA REGULATION DU CLIQUETIS D'UN MOTEUR A COMBUSTION INTERNE, NOTAMMENT D'UN VEHICULE

(30) Priorität: 30.05.2000 DE 10026755
(43) Veröffentlichungstag der Anmeldung: 12.03.2003
(73) Patentinhaber: ROBERT BOSCH GMBH, 70442 Stuttgart (DE)
(72) Erfinder: FRANKE, Steffen, Brentwood Essex CM14 5BT (GB); HAUSSMANN, Martin, 74343 Sachsenheim (DE)
(86) Internationale Anmeldenummer: PCT/DE2001/001318
(87) Internationale Veröffentlichungsnummer: WO 2001/092717

(56) Entgegenhaltungen:
- DE-A- 4 300 406
- DE-A- 19 740 365
- US-A- 5 000 150
- US-A- 5 235 953

## Beschreibung

Die Erfindung betrifft ein Verfahren zur Klopfregelung eines Verbrennungsmotors insbesondere eines Fahrzeugs, mit den Schritten entsprechend dem einleitenden Teil des Anspruchs 1.

### Stand der Technik

Klopfregelungen zur Vermeidung einer klopfenden Verbrennung in einem Zylinder eines Verbrennungsmotors mittels Einstellung eines geeigneten Basiszündwinkels sind bekannt. Dabei ist der Basiszündwinkel als frühestzulässiger Winkel definiert, bis zu welchem keine klopfende Verbrennung im Verbrennungsmotor stattfindet. Da eine klopfende Verbrennung in jedem Zylinder des Verbrennungsmotors separat auftreten kann, ist der entsprechende Basiszündwinkel zylinderspezifisch einzustellen. Der jeweilige Wert des Basiszündwinkels wird aus der Summe eines Grundzündwinkelwerts, eines Zündwinkelkorrekturwerts und eines Zündwinkelspätverstellungswerts gebildet. Durch die Zündwinkelkorrektur werden Temperatur- und Drehzahleinflüsse bei der Bestimmung beziehungsweise Berechnung des Basiszündwinkels berücksichtigt. Die Zündwinkelspätverstellung ist somit zur aktiven Klopfregelung vorgesehen. Somit definiert der Basiszündwinkel eine aktuell bestimmte, zylinderspezifische und während der Betriebszeit des Verbrennungsmotors sich verändernde Klopfgrenze.

Eine aktive Klopfregelung kann allerdings nur dann die tatsächlich vorliegende Klopfgrenze und somit den tatsächlich vorliegenden Basiszündwinkel mittels einer geeigneten Zündwinkelspätverstellung bestimmen und einstellen, wenn der Regelkreis bestehend aus der Klopfregelung (als Regler) und dem Verbrennungsmotor (als Regelstrecke) geschlossen ist. Dies bedeutet; dass die Klopfregelung tatsächlich am Verbrennungsmotor beziehungsweise am jeweiligen Zylinder wirksam sein muss, damit gewährleistet werden kann, dass der Istzündwinkel den Wert des Basiszündwinkels aufweist..

Ferner ist ein Sollzündwinkel zu einer Drehmomentenumsetzung für kurbelwellensynchrone Eingriffe definiert. Dabei handelt es sich bei dem Sollzündwinkel um eine aus einer Motormomentensteuerung resultierende Sollgröße zur Wirkungsgradreduzierung mittels einer Zündwinkelspätverstellung. Der Sollzündwinkel wird nach oben auf den frühest zulässigen Zündwinkel, das heißt auf den jeweiligen Basiszündwinkel, und nach unten auf einen spätest zulässigen Zündwinkel begrenzt. Dieser Sollzündwinkel wird im Falle eines aktiven Drehmomenteneingriffs als Istzündwinkel verwendet und kommt somit zur Ausgabe an die Zündung. Für den Fall, dass kein Drehmomenteneingriff vorliegt, wird der Basiszündwinkel als Istzündwinkel verwendet.

Bei Vorliegen eines aktiven Drehmomenteneingriffs wird der Klopfregelkreis unterbrochen, so dass der Wert des Istzündwinkels gleich dem Sollzündwinkel und ungleich dem Basiszündwinkel ist. Aufgrund des unterbrochenen Klopfregelkreises kann die Klopfregelung Änderungen der tatsächlichen Klopfgrenze nicht beziehungsweise nur mit Verzögerung erfassen. Dies führt nachteilhafterweise zu einer unzulässigen Erhöhung der Klopfhäufigkeit.

### Vorteile der Erfindung

Das erfindungsgemäße Verfahren zur Klopfregelung ist in Anspruch 1 definiert. Zur klopfregelnden Einstellung des zweiten Basiszündwinkels erfolgt eine Abfrage in Bezug auf das Größenverhältnis zwischen einem zur Wirkungsgradreduzierung dienenden Sollzündwinkel und dem ersten Basiszündwinkel. Durch diese Abfrage vor Einleiten der Zündwinkelspätverstellung ist es möglich, verschiedene Betriebsfälle hinsichtlich des Größenverhältnisses zwischen Sollzündwinkel und Basiszündwinkel zu unterscheiden und entsprechende Maßnahmen einzuleiten. Dabei ist es insbesondere von Vorteil, den Betriebsfall mit einem hinsichtlich des vorliegenden Basiszündwinkels kleineren Sollzündwinkel zu differenzieren, um eine besonders effektive und möglichst schnell wirkende Klopfregelung mittels einer geeigneten Zündwinkelspätverstellung einleiten zu können. Dabei kann die geeignete Zündwinkelspätverstellung mittels eines vom Größenverhältnis zwischen Sollzündwinkel und vorliegendem Basiszündwinkel abhängigen, angepassten und variablen Spätverstellungswert erfolgen.

Vorzugsweise lässt die Abfrage zwei Entscheidungsmöglichkeiten zu. Da lediglich der Betriebsfall zu differenzieren ist, ob der Sollzündwinkel kleiner als der vorliegende Basiszündwinkel ist, bietet es sich an, eine entsprechende Abfrage mit zwei Entscheidungsmöglichkeiten (ja oder nein) vorzusehen.

Mit Vorteil erfolgt nach der Abfrage bei einem im Vergleich zum ersten Basiszündwinkel kleineren Sollzündwinkel eine Zündwinkelspätverstellung mit einem neu einzustellenden Verstellungswert, der aus der Summe eines vorher festgelegten, konstanten Spätverstellungswerts und eines angepassten, variablen Spätverstellungswerts gebildet wird. Eine derartig gekennzeichnete Zündwinkelspätverstellung, das heißt mit einem neu einzustellenden Verstellungswert, der aus der Summe eines konstanten Werts und eines angepassten Werts gebildet wird, ist es in besonders effektiver Weise möglich, durch geeignete Wahl des angepassten Werts eine schnelle und zuverlässige Klopfregelung zu erhalten.

Vorteilhafterweise erfolgt die Zündwinkelspätverstellung zur Einstellung des zweiten Basiszündwinkels in einem einzigen Regelschritt. Durch eine geeignete Wahl des angepassten Spätverstellungswerts kann die Zündwinkelspätverstellung zur Ermittlung des zweiten Basiszündwinkels vorzugsweise in einem einzigen Regelschritt erfolgen. Dadurch wird eine zuverlässige und insbesondere schnelle Klopfregelung ermöglicht. Es wird eine unzulässig häufige, klopfende Verbrennung aufgrund des sich ergebenden Unterschieds zwischen dem ermittelten (theoretischen) Basiszündwert und einem realen Basiszündwert (tatsächliche Klopfgrenze) bei Vorsehen einer Vielzahl von konstanten, verhältnismäßig kleinen Regelschritten vermieden.

Vorzugsweise wird der angepasste, variable Spätverstellungswert als Differenz zwischen dem größeren, ersten Basiszündwinkel und dem kleineren Sollzündwinkel definiert. Ein in dieser Weise definierter, angepasster und variabler Spätverstellungswert gewährleistet eine Einstellung des zweiten Basiszündwinkels mittels einer Zündwinkelspätverstellung in einem einzigen Regelschritt.

Mit Vorteil erfolgt nach der Abfrage bei einem im Vergleich zum ersten Basiszündwinkel größeren oder gleich großen Sollzündwinkel eine Zündwinkelspätverstellung mit einem Verstellungswert, der dem vorher festgelegten, konstanten Spätverstellungswert entspricht. Da in diesem Betriebsfall der Sollzündwinkel nicht kleiner ist als der erste Basiszündwinkel, so dass die Voraussetzung zur Mitberücksichtigung eines angepassten, variablen Spätverstellungswerts bei der Zündwinkelspätverstellung nicht vorliegt, kann der Verstellungswert durch einen vorher festgelegten, konstanten Spatverstellungswert definiert werden.

Vorteilhafterweise erfolgt bei nichtauftretender, klopfender Verbrennung bei dem ersten Basiszündwinkel keine Zündwinkelspätverstellung. Durch Berücksichtigung dieses weiteren, alternativ auftretenden Betriebsfalls bei der Verbrennung ist es möglich, einen geschlossenen Regelkreis zur effektiven, zuverlässigen und schnellen Klopfregelung eines Verbrennungsmotors unter Berücksichtigung verschiedener Betriebsfälle zu realisieren.

Weitere vorteilhafte Ausgestaltungen der Erfindung ergeben sich aus der Beschreibung.

### Zeichnungen

Die Erfindung wird nachfolgend in einer Ausführungsvariante anhand zugehöriger Zeichnungen näher erläutert. Es zeigen:
- Figur 1: ein betriebszeitabhängiges Diagramm mit Kennlinien verschiedener Zündwinkel und
- Figur 2: ein eine anpassbare Zündwinkelspätverstellung darstellendes Blockschaltbild.

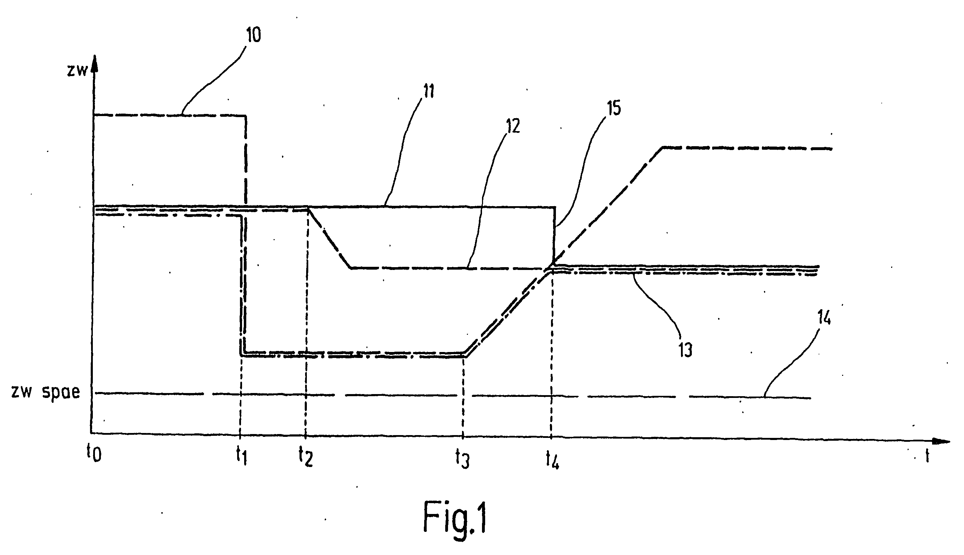

Figur 1 zeigt ein betriebszeitabhängiges Diagramm mit mehreren Zündwinkelkennlinien zur Darstellung verschiedener Betriebssituationen eines Verbrennungsmotors. Dabei entspricht ein größerer Zündwinkel zw einem früheren Zündzeitpunkt und ein kleinerer Zündwinkel zw einem späteren Zündzeitpunkt. In Figur 1 wird durch die Kennlinie 10 der Verlauf des Sollzündwinkels, durch die Kennlinie 11 der Verlauf des ermittelten Basiszündwinkels (erster Basiszündwinkel), durch die Kennlinie 12 der Verlauf des realen Basiszündwinkels, durch die Kennlinie 13 der Verlauf des Istzündwinkels und durch die Kennlinie 14 der Wert des spätest zulässigen Zündwinkels in Abhängigkeit der Betriebszeit t illustriert. In der Zeitspanne t₀ bis t₁ ist der Klopfregelkreis geschlossen, so dass die Klopfregelung den Istzündwinkel gemäß Kennlinie 13 auf den Wert des ermittelten Basiszündwinkels entsprechend der Kennlinie 11 regelt. Dabei entspricht der Wert des ermittelten Basiszündwinkels (Kennlinie 11) demjenigen des realen Basiszündwinkels (Kennlinie 12). Der Sollzündwinkel (Kennlinie 10) weist in der Zeitspanne t₀ bis t₁ eine im Vergleich zum Istzündwinkel (Kennlinie 13) größeren Wert auf, was einem früheren Sollzündzeitpunkt entspricht.

Zum Zeitpunkt t₁ beginnt ein Drehmomenteneingriff zu wirken, wodurch der Sollzündwinkel (Kennlinie 10) auf einen späteren Zündzeitpunkt (kleinerer Zündwinkel) schlagartig verschoben wird. Aufgrund des Drehmomenteneingriffs ist der Klopfregelkreis unterbrochen, so dass der Istzündwinkel (Kennlinie 13) dem Sollzündwinkel (Kennlinie 10) entspricht. Verschiebt sich nun ab dem Zeitpunkt t₂ bei weiterhin aktivem Drehmomenteneingriff der reale Basiszündwinkel (Kennlinie 12), beispielsweise aufgrund einer Last- und/oder Temperaturänderung, auf einen kleineren Wert (früherer Zündzeitpunkt), wobei der reale Basiszündwinkel (Kennlinie 12) immer noch größer ist als der Sollzündwinkel (Kennlinie 10), so ist die Klopfregelung nicht mehr in der Lage, eine derartige Verschiebung des realen Basiszündwinkels (Kennlinie 12) in Bezug auf den ermittelten Basiszündwinkel (Kennlinie 11) zu erfassen.

Ab dem Zeitpunkt t₃ wird der Drehmomenteneingriff zurückgenommen, so dass der Klopfregelkreis wieder geschlossen ist und der Sollzündwinkel (Kennlinie 10) durch die Klopfregelung auf den früheren Zündzeitpunkt (größere Zündwinkelwerte) und gegebenenfalls auf den früheren Wert abgeregelt wird. Bis zu dem Zeitpunkt t₄ entspricht der Sollzündwinkel (Kennlinie 10) dem Istzündwinkel (Kennlinie 13).

Ab dem Zeitpunkt t₄ erreicht der Istzündwinkel (Kennlinie 13) den Wert des realen Basiszündwinkels (Kennlinie 12), so dass bei bereits geringfügigem Überschreiten des Istzündwinkels über den realen Basiszündwinkel, der die tatsächliche Klopfgrenze darstellt, zwangsläufig eine klopfende Verbrennung einsetzt. Diese wird allerdings durch die aktive Klopfregelung (geschlossener Klopfregelkreis) erkannt, so dass der ermittelte (erste) Basiszündwinkel (Kennlinie 11) zu kleineren Zündwinkeln (spätere Zündzeitpunkte) bis auf einen zweiten Basiszündwinkel mit dem Wert des realen Basiszündwinkels (Kennlinie 12) geregelt wird. Dabei erfolgt die Regelung des ermittelten Basiszündwinkels (Kennlinie 11) auf den realen Basiszündwinkel (Kennlinie 12) vorteilhafterweise mittels eines einzigen Regelschritts (Linie 15). In dieser Weise wird somit in der Zeitspanne t₃ bis t₄, das heißt bei wieder geschlossenem Regelkreis und erneut aktivierter Klopfregelung, der Istzündwinkel (Kennlinie 13) stetig wachsend bis zum realen Basiszündwinkel (Kennlinie 12) geführt, wobei ein nachteilhaftes, übermäßiges Überschwingen des Istzündwinkels über den realen Basiszündwinkel zum Zeitpunkt t₄ und ein daran sich anschließendes, verhältnismäßig langsames und somit für eine gewisse Zeitspanne eine klopfende Verbrennung zulassendes Zurückregeln des Istzündwinkels auf den realen Basiszündwinkel vermieden wird. Aufgrund der besonders effektiven und schnellen Zündwinkelspätverstellung gemäß der Linie 15 werden eventuell sich einstellende klopfende Verbrennungen ab dem Zeitpunkt t₄ auf ein Minimum beschränkt.

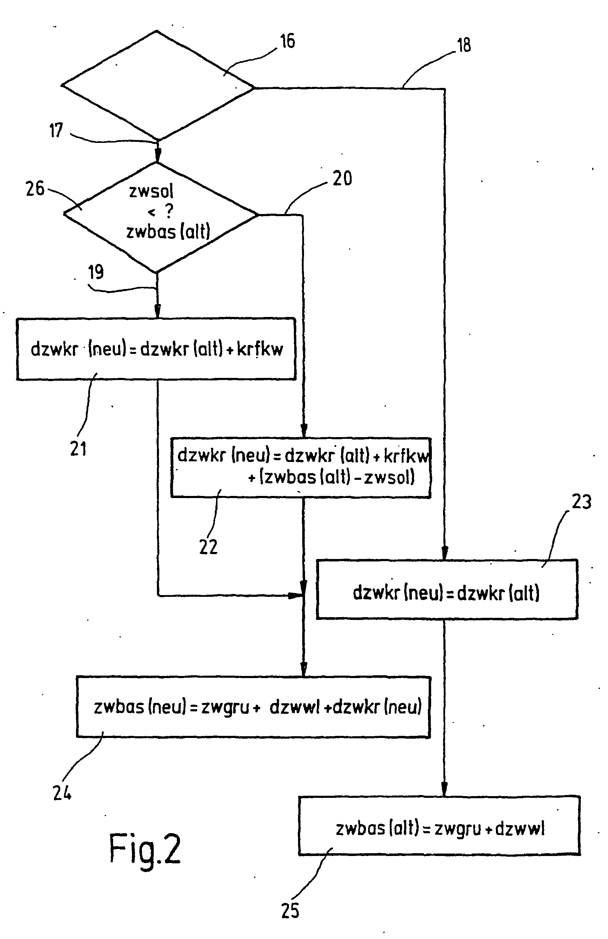

Figur 2 zeigt ein eine anpassbare Zündwinkelspätverstellung illustrierendes Blockschaltbild. In einem mit 16 gekennzeichneten Block erfolgt eine Abfrage in Bezug auf eine vorliegende klopfende Verbrennung in einem oder in mehreren Zylindern eines Verbrennungsmotors, wobei die Abfrage mit "ja" (Pfeil 17) oder mit "nein" (Pfeil 18) beantwortet werden kann. Nach Feststellen einer klopfenden Verbrennung (Pfeil 17) bei einem ersten Basiszündwinkel (ermittelter Basiszündwinkel) in einem oder in mehreren Zylindern des Verbrennungsmotors erfolgt eine Abfrage (Block 26) in Bezug auf das Größenverhältnis zwischen Sollzündwinkel zwsol und vorliegendem Basiszündwinkel zwbas(alt). Die Abfrage umfasst zwei Entscheidungsmöglichkeiten (ja - Pfeil 20 / nein - Pfeil 19) in Bezug auf die Frage, ob der Sollzündwinkel zwsol kleiner als der Basiszündwinkel zwbas(alt) ist. Für den Fall, dass der Sollzündwinkel zwsol kleiner als der Basiszündwinkel zwbas(alt) ist (Pfeil 20), erfolgt eine Zündwinkelspätverstellung dzwkr mit einem neu einzustellenden Verstellungswert dzwkr (neu) (Block 22), der aus der Summe eines vorher festgelegten, konstanten Spätverstellungswerts (dzwkr(alt)+krfkw), wobei krfkw ein nicht angepasster, vorher festgelegter und konstanter Zündwinkelspätverstellungswert pro erkanntem Klopfereignis ist, und eines angepassten, variablen Spätverstellungswerts (zwbas (alt) -zwsol) gebildet wird. Hierbei ist zu beachten, dass der angepasste, variable Spätverstellungswert als Differenz zwischen dem größeren, vorliegenden Basiszündwinkel zwbas(alt) (ermittelter Basiszündwinkel gemäß Kennlinie 11 der Figur 1) und dem kleineren Sollzündwinkel zwsol definiert wird. Der angepasste, variable Spätverstellungswert (zwbas(alt)-zwsol) entspricht somit der Linie 15 in Figur 1 und stellt die zu überbrückende Differenz zwischen dem zum früheren Zeitpunkt t₁ ermittelten Basiszündwert (Kennlinie 11) und der zum Zeitpunkt t₄ tatsächlich existierenden Klopfgrenze (Kennlinie 12) dar. Durch diese Zündwinkelspätverstellung dzwkr wird somit der ermittelte Basiszündwinkel (Kennlinie 11 der Figur 1) auf den Wert des realen Basiszündwinkels (Kennlinie 12 der Figur 1) geregelt, so dass der neue, zweite Basiszündwinkel zwbas(neu) (Block 24) aus der Summe des Grundzündwinkelwerts zwgru, des Zündwinkelkorrekturwerts dzwwl und des Zündwinkelspätverstellungswerts dzwkr(neu) gebildet wird.

Für den Fall, dass der Sollzündwinkel zwsol nicht kleiner als der Basiszündwinkel zwbas (alt) ist (Pfeil 19), erfolgt eine Zündwinkelspätverstellung dzwkr mit einem Verstellungswert dzwkr(neu) (Block 21), der dem vorher festgelegten, konstanten Spätverstellungswert (dzwkr(alt)+krfkw) entspricht.

Für den Fall, dass bei dem vorliegenden Basiszündwinkel zwbas(alt) keine klopfende Verbrennung auftritt (Pfeil 18), erfolgt keine Zündwinkelspätverstellung. Dabei ist in diesem Betriebsfall der Verstellungswert dzwkr(neu) gleich dem Verstellungswert dzwkr(alt) (Block 23), der als gespeicherter Verstellungswert zur Klopfregelung von zukünftig auftretenden klopfenden Verbrennungen herangezogen wird. Im Ausführungsbeispiel gemäß Figur 2 wird dieser unveränderte, gespeicherte Verstellungswert dzwkr(alt) in Block 21 und Block 22 zur Zündwinkelspätverstellung herangezogen. Bei nicht vorliegender klopfender Verbrennung wird der für die zukünftige Klopfregelung einzustellende beziehungsweise eingestellte Basiszündwinkel zwbas(alt) (Block 25) aus der Summe des Grundzündwinkelwerts zwgru und des Zündwinkelkorrekturwerts dzwwl gebildet.

Durch Vorsehung der Abfrage und des neu einzustellenden Verstellungswerts bei einem Sollzündwinkel, der kleiner als der Basiszündwinkel ist, ist es möglich, die Klopfhäufigkeit ab dem Zeitpunkt t₄ deutlich zu senken, was zu einem Komfortgewinn (Klopfgeräusch), weniger Verschleiss (Klopfschäden) und besserer Fahrbarkeit des Fahrzeugs führt. Da ein Überschwingen des Istzündwinkels zum Zeitpunkt t₄ über den realen Basiszündwinkel (tatsächliche Klopfgrenze) einem Überschwingen des abgegebenen Moments entspricht, wird vorteilhafterweise durch das erfindungsgemäße Verfahren auch das Auftreten von Ruckeln während des Betriebs des Fahrzeugs vollständig vermieden beziehungsweise stark eingegrenzt.

Dieses Verfahren zur Klopfregelung eines Verbrennungsmotors insbesondere eines Fahrzeugs lässt sich einfach in bestehende Regelungsstrukturen integrieren, mittels welcher sowohl eine Zündungskoordinätion als auch eine Klopfregelung erfolgt.

## Patentansprüche

1. Verfahren zur Klopfregelung eines Verbrennungsmotors insbesondere eines Fahrzeugs, mit folgenden Schritten:
- Feststellen einer klopfenden Verbrennung bei einem ermittelten, aus einem vorherigen Betriebszustand stammenden, ersten Basiszündwinkel in einem oder mehreren Zylindern des Verbrennungsmotors;
- Einstellen eines neuen, den vorliegenden Betriebszustand berücksichtigenden, zweiten Basiszündwinkels,
- wobei der Basiszündwinkel als frühest zulässiger Winkel definiert ist, bis zu welchem keine klopfende Verbrennung im Verbrennungsmotor stattfindet,
**dadurch gekennzeichnet, dass** die klopfregelnde Einstellung des zweiten Basiszündwinkels (zwbas (neu)) in Bezug auf das Größenverhältnis zwischen einem zur Wirkungsgradreduzierung dienenden Sollzündwinkel (zwsol) und dem ersten Basiszündwinkel (zwbas (alt)) erfolgt.

2. Verfahren nach Anspruch 1, **dadurch gekennzeichnet, dass** die Einstellung zwei Entscheidungsmöglichkeiten zulässt.

3. Verfahren nach einem der vorhergehenden Ansprüche, **dadurch gekennzeichnet, dass** bei einem im Vergleich zum ersten Basiszündwinkel (zwbas(alt)) kleineren Sollzündwinkel (zwsol) eine Zündwinkelspätverstellung (dzwkr) zur Einstellung des zweiten Basiszündwinkels (zwbas(neu)) mit einem neu einzustellenden Verstellungswert (dzwkr(neu)) erfolgt, der aus der Summe eines vorher festgelegten, konstanten Spätverstellungswerts (dzwkr(alt)+ krfkw) und eines angepassten, variablen Spätverstellungswerts (zwbas(alt)-zwsol) gebildet wird.

4. Verfahren nach einem der vorhergehenden Ansprüche, **dadurch gekennzeichnet, dass** die Zündwinkelspätverstellung (dzwkr) zur Einstellung des zweiten Basiszündwinkels (zwbas(neu)) in einem einzigen Regelschritt erfolgt.

5. Verfahren nach einem der vorhergehenden Ansprüche, **dadurch gekennzeichnet, dass** der angepasste, variable Spätverstellungswert als Differenz zwischen dem größeren, ersten Basiszündwinkel (zwbas(alt)) und dem kleineren Sollzündwinkel (zwsol) definiert wird.

6. Verfahren nach einem der vorhergehenden Ansprüche, **dadurch gekennzeichnet, dass** bei einem im Vergleich zum ersten Basiszündwinkel (zwbas (alt)) größeren oder gleich großen Sollzündwinkel (zwsol) eine Zündwinkelspätverstellung (dzwkr) mit einem Verstellungswert (dzwkr(neu)) erfolgt, der dem vorher festgelegten, konstanten Spätverstellungswert (dzwkr(alt)+krfkw) entspricht.

7. Verfahren nach einem der vorhergehenden Ansprüche, **dadurch gekennzeichnet, dass** bei nichtauftretender, klopfender Verbrennung bei dem ersten Basiszündwinkel (zwbas(alt)) keine Zündwinkelspätverstellung erfolgt.

## Claims

1. Method for controlling knocking of an internal combustion engine, in particular in a vehicle, having the following steps:
- detection of knocking combustion at a detected first basic ignition angle which originates from a previous operating state, in one or more cylinders of the internal combustion engine;
- setting of a new, second basic ignition angle which takes into account the present operating state,
- the basic ignition angle being defined as the earliest possible angle up to which no knocking combustion in the internal combustion engine occurs,
the setting of the second basic ignition angle (zwbas(new)) which controls knocking is made with respect to the size ratio between a setpoint ignition angle (zwsol) which is used to reduce efficiency and the first basic ignition angle (zwbas(alt)).

2. Method according to Claim 1, **characterized in that** the setting permits two decision possibilities.

3. Method according to one of the preceding claims, **characterized in that** at a setpoint ignition angle (zwsol) which is smaller compared to the first basic ignition angle (zwbas(alt)) the ignition angle is adjusted in the retarded direction (dzwkr) in order to set the second basic ignition angle (zwbas (new)) with an adjustment value (dzwkr(new)) which is to be newly set and which is formed from the sum of a previously defined, constant retarded-direction adjustment value (dzwkr(alt)+krfkw) and an adapted, variable retarded-direction adjustment value (zwbas(alt)-zwsol).

4. Method according to one of the preceding claims, **characterized in that** the adjustment of the ignition angle in the retarded-direction (dzwkr) is carried out in order to set the second basic ignition angle (zwbas(new)) in a single control step.

5. Method according to one of the preceding claims, **characterized in that** the adapted, variable retarded-direction adjustment value is defined as a difference between the larger, first basic ignition angle (zwbas(alt)) and the smaller setpoint ignition angle (zwsol).

6. Method according to one of the preceding claims, **characterized in that** at a setpoint ignition angle (zwsol) which is larger than or equal to the first basic ignition angle (zwbas(alt)), an adjustment of the ignition angle in the retarded direction (dzwkr) is carried out with an adjustment value (dzwkr(new)) which corresponds to the previously defined, constant retarded-direction adjustment value (dzwkr(alt)+krfkw).

7. Method according to one of the preceding claims, **characterized in that** when knocking combustion does not occur at the first basic ignition angle (zwbas (alt)) the ignition angle is not adjusted in the retarded direction.

## Revendications

1. Procédé pour la régulation du cliquetis d'un moteur à combustion interne, notamment d'un véhicule, avec les étapes suivantes consistant à :
- déterminer une combustion avec cliquetis dans le cas d'un premier angle d'allumage de base calculé, provenant d'un état de fonctionnement précédent, dans un ou plusieurs cylindres du moteur à combustion interne ;
- régler un nouveau deuxième angle d'allumage de base tenant compte de l'état de fonctionnement existant,
- l'angle d'allumage de base étant défini à partir du premier angle autorisé jusqu'auquel il n'y a plus de combustion avec cliquetis dans le moteur à combustion interne,
**caractérisé en ce que**
le réglage de régulation du cliquetis du deuxième angle d'allumage de base (zwbas(nouveau)) en se référant au rapport de grandeur se produit entre un angle d'allumage de consigne(zwcons) servant à la réduction du degré d'efficacité et le premier angle d'allumage de base (zwbas(ancien)).

2. Procédé selon la revendication 1,
**caractérisé en ce que**
le réglage permet deux possibilités de décision.

3. Procédé selon l'une quelconque des revendications précédentes,
**caractérisé en ce que**
dans le cas d'un angle d'allumage de consigne (zwcons) plus petit par rapport au premier angle d'allumage de base (zwbas(ancien)), un retard à l'allumage (dzwkr) pour le réglage du deuxième angle d'allumage de base (zwbas(nouveau)) a lieu avec une valeur de réglage à régler de nouveau (dzwkr(nouveau)) formée à partir de la somme d'une nouvelle valeur de retard constante définie au préalable (dzwkr(ancien)+krfkw) et d'une valeur de retard variable adaptée (zwbas(ancien)-zwcons).

4. Procédé selon l'une quelconque des revendications précédentes,
**caractérisé en ce que**
le retard d'allumage (dzwkr) pour le réglage du deuxième angle d'allumage de base (zwbas(nouveau)) a lieu en une seule étape de réglage.

5. Procédé selon l'une quelconque des revendications précédentes,
**caractérisé en ce que**
la valeur de retard variable adaptée est définie en tant que différence entre le premier angle d'allumage de base plus grand (zwbas(ancien)) et l'angle d'allumage théorique plus petit (zwcons).

6. Procédé selon l'une quelconque des revendications précédentes,
**caractérisé en ce que**
dans le cas d'un angle d'allumage de consigne (zwcons) supérieur ou égal au premier angle d'allumage de base (zwbas(ancien)), il y a un retard d'allumage (dzwkr) avec une valeur de réglage (dzwkr(nouveau)) correspondant à la valeur de retard constante précédemment fixée (dzwkr(ancien)+krfkw).

7. Procédé selon l'une quelconque des revendications précédentes,
**caractérisé en ce que**
dans le cas d'une combustion avec cliquetis n'ayant pas lieu pour le premier angle d'allumage de base (zwbas(ancien)), il n'y a aucun retard d'allumage.
